# EUROPEAN PATENT APPLICATION

(11) **EP 4 180 860 A1**
(43) Date of publication of application: **17.05.2023**
(21) Application number: 21386069.5
(22) Date of filing: 10.11.2021
(51) Int. Cl.: G02B 27/00

(54) **LIGHT SCANNING EYE TRACKING**

(71) Applicant: ams International AG, 8645 Jona (CH)
(72) Inventor: Zagolla, Volker, 5656 AE Eindhoven (NL); Papadopoulos, Ioannis, 5656 AE Eindhoven (NL)
(74) Representative: Yazitzoglou, Evagelia S.

(57) **Abstract**

An optical device (1) for eye tracking comprises a light scanner (2) configured to scan a light beam (6) across an eye (3), an optical element (4) configured to collect light (7) reflected from the eye (3) and incident on the optical element (4) at a predefined angle onto a sensor (5), and the sensor (5) configured to sense the light (8) collected by the optical element (4).

## Description

### FIELD OF DISCLOSURE

The present disclosure concerns light scanning eye tracking to determine the position of the eye.

### BACKGROUND

Various methods of eye tracking exist and are used in e.g. AR and VR systems to determine the direction of the user's gaze. However, conventional solutions lack at least one of accuracy, low power consumption, high speed.

### SUMMARY

The present disclosure provides an optical device for integrating in a head mounted device (e.g. smart glasses or VR goggles) to provide accurate, low power and high speed eye tracking.

According to a first aspect of the present disclosure there is provided an optical device for eye tracking comprising a light scanner (typically a laser scanner) configured to scan a light beam across an eye an optical element configured to collect (e.g. focus) light reflected from the eye and incident on the optical element at a predefined angle onto a sensor, and the sensor configured to sense the light collected by the optical element.

Because the optical element can be configured to only collect the light incident at the predefined angle onto the sensor, the sensor will provide a substantially binary output as certain scanning angles from the light scanner provide reflections from the eye at the predefined angle, while scanning angles, which provide reflections at other angles, will cause substantially no signal at the sensor. As the eye rotates, the angle of incidence on the cornea for a given scanning angle changes, which allows the rotational position of the eye to be determined.

The light scanner can be configured to perform different types of 2D scanning. For example vertical scanning, in which the light beam is scanned across the eye top to bottom (or bottom to top) until a sufficient area of the eye has been covered. This can provide a straightforward and low complexity solution.

Alternatively, the light scanner can be configured to follow the movement of the eye. Vertical pursuit infers the movement direction of the eye in a few horizontal scans and then follows with the next scanline in the movement direction.

The optical device can also be configured to perform orthogonal 1D scanning. For example, the optical device may comprise two light sources and 1D scan mirrors, and two optical elements and respective photodiodes arranged in a substantially orthogonal manner.

The optical element can be configured to collect light (e.g. laser light) in the infrared (IR) or near infrared (NIR) spectrum for example light having a wavelength in the range of 850 nm to 1400 nm. IR light is not visible and therefore does not disturb the field of vision of the user. Preferably, the optical element is substantially transparent to light having a wavelength in the visible range, so as not to impede normal vision. The optical element may be configured to collect light having a wavelength in the range of 300 nm to 2000 nm.

The optical element may comprise a diffractive element configured to reflect light incident at the predefined angle. This can allow the sensor to be located behind the optical element (on the same side of the optical element as the user's eye), which can allow the sensor to be integrated in the stem of a head mounted device, where it is less likely to obstruct vision and can provide a more compact solution.

The sensor typically comprises a photodiode. The photodiode can measure the intensity of incident light and can provide a low complexity solution. The sensor does not need to image the eye, but only to measure the intensity of incident light as a function of scanning angle of the light scanner. The sensor only requires one (i.e. a single) photodiode, onto which the optical element is configured to collect the light. The sensor may in addition or alternatively comprise an array of pixels and/or a quadrant sensor (4 differential photodiodes).

The light scanner is typically a micromechanical systems, MEMS, laser scanner, for example comprising a vertical cavity surface emitting laser (VCSEL) source and a micromirror The VCSEL source and micromirror can provide a low power solution for laser scanning. The VCSEL source may be configured to emit light at a wavelength in the range of 850 nm to 1400 nm. Alternatively, the light scanner may comprise a phased array scanner, active optics, light modulators, a non-mems scanning mirror, such as e.g. a galvo or voice coil, a Risley prism scanner or hexagonal mirror scanner.

The optical device may comprise two optical elements configured to collect light reflected from the eye and incident on the optical elements at different respective predefined angles onto the sensor. That is each optical element, which may be located in front of one of the user's eyes when in use, is configured with its own predefined angle. Light incident on the optical elements at the respective predefined angles is collected onto the sensor (while light incident at other angles is not). For example, a first optical element may have an associated predefined angle of 120° and a second optical element with an associated predefined angle of 60°.

Each optical element can be configured to collect the light onto the same photodiode of the sensor. Alternatively, the sensor may comprise a photodiode for each optical element, and each optical element can be configured to collect light onto a respective photodiode of the sensor.

The optical device may further comprise a reflector located in a scanning path for reflecting the light beam onto the eye. The reflector may be a custom diffractive optical element located in the scanning path to add flexibility in the placement of the light scanner.

According to a second aspect of the present disclosure there is provided a head mounted device comprising an optical device according to the first aspect. At least the light scanner and the sensor of the optical device may be located in a stem of the head mounted device (e.g. in the stem of a pair of glasses by the side of the user's head). Alternatively the light scanner can be located in the frame.

The sensor and light scanner may be located on different sides of the or each optical element, so that the light reflected from the eye travels through the or each optical element to the sensor. For example, the light scanner may be located behind the glasses and the optical element(s) in front of the glasses.

According to a third aspect of the present disclosure there is provided a method of eye tracking. The method comprises scanning a light beam (typically a laser beam) across an eye by sweeping the beam over a range of scanning angles, and collecting light reflected from the eye and incident on an optical element at a predefined angle onto a sensor. The method further comprises receiving the collected light with the sensor and measuring an intensity of the collected light, and mapping the intensity and associated scanning angle of the light beam to a rotational position of the eye.

The method may be carried out using an optical device according to the first aspect.

### BRIEF DESCRIPTION OF THE PREFERRED EMBODIMENTS

Figure 1 shows a schematic diagram of an optical device according to an embodiment with an optical element;
Figure 2A shows a schematic diagram of an optical device according to an embodiment and illustrating multiple laser beams at different scanning angles;
Figure 2B shows a schematic diagram of the optical device after the eye has rotated;
Figure 3 shows a schematic diagram of an optical device according to an embodiment having two optical elements;
Figure 4 shows a 2D plot of the signal amplitude as a function of the eyes rotational position and the scanning angle of the laser scanner;
Figure 5 shows cross sectional plots taken at four different rotational positions from the plot of Figure 4;
Figure 6 shows a schematic diagram of a part of a head mounted device with an optical device according to an embodiment;
Figure 7A shows a 2D plot of the signal amplitude as a function of the eyes rotational position and the scanning angle of the laser scanner when the eye is in first translational position relative to the optical device;
Figure 7B shows a 2D plot of the signal amplitude as a function of the eyes rotational position and the scanning angle of the laser scanner when the eye is in a second translational position relative to the optical device;
Figure 7C shows a 2D plot of the signal amplitude as a function of the eyes rotational position and the scanning angle of the laser scanner when the eye is in a third translational position relative to the optical device;
Figure 8 shows cross sectional plots of the signal amplitude from Figures 7A to 7C respectively;
Figure 9 shows a schematic diagram of a part of a head mounted device with an optical device according to an embodiment;
Figure 10A shows a 2D plot of the signal amplitude as a function of the eyes rotational position and the scanning angle of the laser scanner when the eye is in a first translational position relative to the optical device;

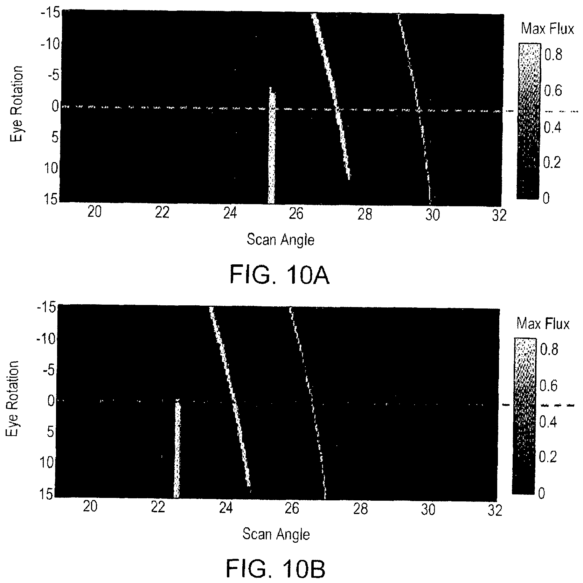

Figure 10A shows a 2D plot of the signal amplitude as a function of the eyes rotational position and the scanning angle of the laser scanner when the eye is in a second translational position, 5 mm back, relative to the optical device;

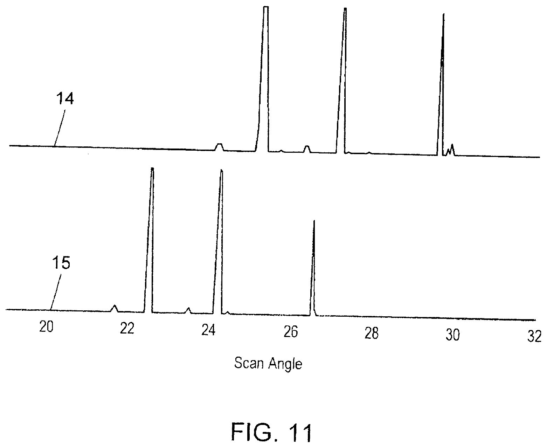

Figure 11 shows cross sectional plots of the signal amplitude from Figures 10A and 10B respectively;

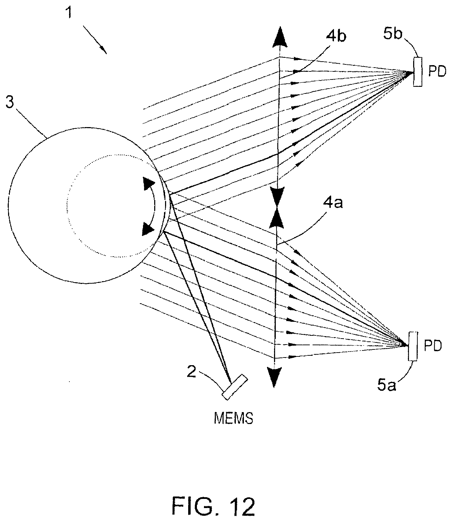

Figure 12 shows a schematic diagram of an optical device having two optical elements according to an embodiment, wherein the sensor is located on the other side of the optical elements;

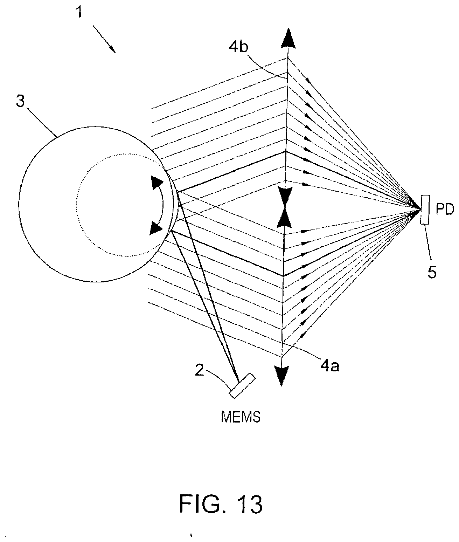

Figure 13 shows a schematic diagram of an optical device having two optical elements according to another embodiment, wherein the sensor is located on the other side of the optical elements, and

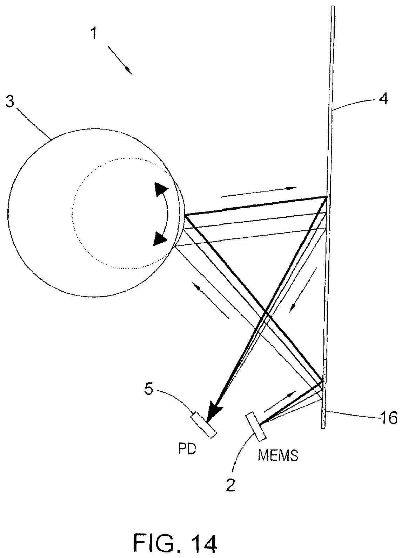

Figure 14 shows a schematic diagram of an optical device according to an embodiment, wherein the laser scanner scans the beam over a reflector that directs the beam onto the eye

### DETAILED DESCRIPTION

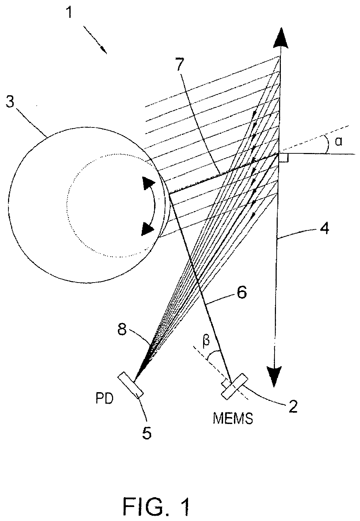

Figure 1 shows a schematic setup with an optical device 1 for eye-tracking according to an embodiment. The optical device 1 comprises a micromechanical system (MEMS) laser scanner 2 for scanning a laser beam over a user's eye 3, an optical element 4 for focusing laser light reflected from the eye 3 and a sensor 5 being a photodiode for receiving the light focused onto it by the optical element 4. The optical element 4 is configured to reflect light incident at a predefined angle α and to focus that light onto the photodiode of the sensor 5. In Figure 1, during scanning, a laser beam 6 is emitted at an angle β towards the eye 3 and reflected 7 from the eye at angle α. The optical element 4 reflects the incident laser light 7 and focuses the light 8 onto the photodiode. The photodiode can be used to measure the intensity of light. Then, as the laser beam is scanned across the eye, a mapping between measured light intensity and the angle β can be provided.

The optical device 1 is configured so that all light (within a given wavelength range) incident on the optical element 4 at the predefined angle α is focused to a point (on the sensor 5). The optical element 4 is highly transparent to visible light (> 90% transparent), so that when integrated in a head mounted device such as AR glasses, it does not impede or distort the view of the user. The optical device 1 is suitable for integrating in such a head mounted device. In particular, the configuration of the optical element 4 allows both the sensor 5 and the MEMS laser scanner 2 to be located on the same side in the stem (along the side of the user's head) of the head mounted device.

Whilst the embodiment of Figure 1 illustrates a MEMS laser scanner 2, other devices that are configured to scan a laser beam 6 across the user's eye 3 may be used. Alternatively, a phased array scanner may be used or, for example, a non-mems scanning mirror such as a galvo or voice coil. Also, active optics or light modulators may be used as well as more traditional means such as a Risley prism scanning or hexagonal mirror scanning.

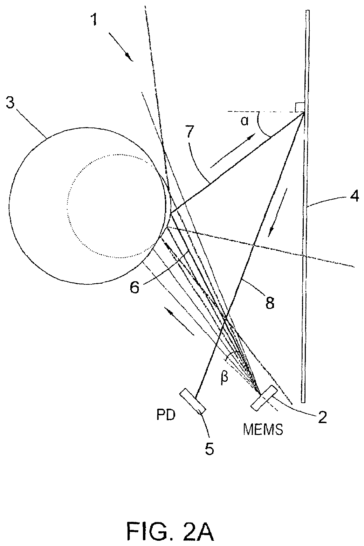

Figure 2A shows the optical device 1 with light emitted from the MEMS laser scanner 2 at different angles (as would occur subsequently in time during scanning). The same reference numerals have been used in different figures for equivalent or similar features to aid understanding and are not intended to limit the illustrated embodiments. Only a laser beam 6, emitted at a particular angle β, provides a reflection 7 incident on the optical element 4 at the predefined angle α, so that the optical element directs the beam 8 onto the sensor 5. The other laser beams reflected from the cornea of the eye 3 are either reflected away from the optical element 4 or onto the optical element 4 but at an angle that is not equal to α, and as such are not directed onto the sensor 5. Hence, only the laser beam 6 emitted at a particular (known) angle β will cause a significant amplitude at the sensor 5. Because this angle depends on the rotational position of the eye 3, the angle β can be used to determine the rotational position of the eye 3.

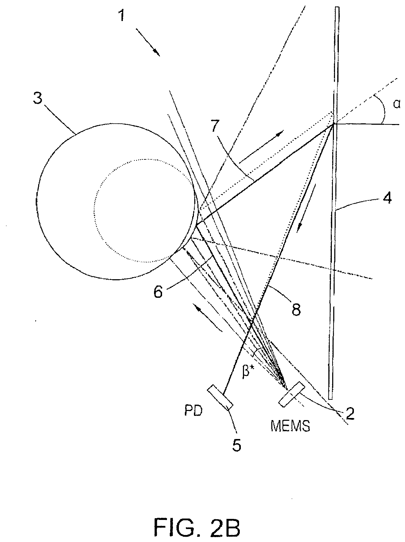

Figure 2B shows the optical device 1 after the eye 3 has moved to a different rotational position. As the MEMS laser scanner 2 scans the laser beam across the eye, a beam 6 emitted at a different angle β* causes a reflection 7 from the eye 3 at the predefined angle α. Because, the photodiode of the sensor 5 now provides a reading at the new scan angle β*, it can be determined that the eye 3 is in a new rotational position. The optical device 1 can be calibrated so that the rotational position or change in rotational position can be determined from the scan angle β*. For example, there may be a mapping between the scan angle, signal amplitude and rotational position.

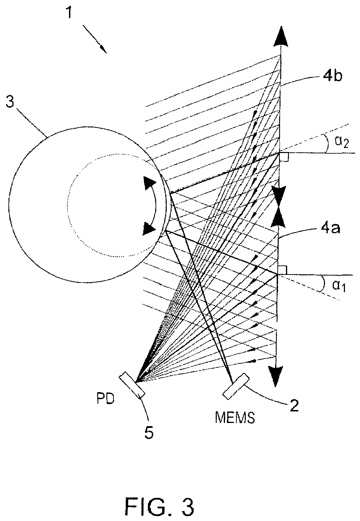

Figure 3 shows a schematic diagram of an optical device 1 according to an embodiment, which includes two optical elements 4a and 4b configured to direct laser light reflected from the eye 3 onto a sensor 5. The first optical element 4a is configured to reflect light incident at a first angle α₁ and the second optical element 4b is configured to reflect light incident at a second (different) angle α₂. Each optical element 4a and 4b can be configured to direct light onto the same photodiode of the sensor 3. Light incident on the optical elements 4a and 4b at other angles are not directed onto the photodiode. Since, the optical elements 4a and 4b have different angles, at which they focus light onto the sensor 3, the photodiode will not receive reflections from both optical elements 4a and 4b simultaneously. In other embodiments, the optical device 1 may comprise further optical elements 4 (three or more), each having a different predefined angle at which light is collected.

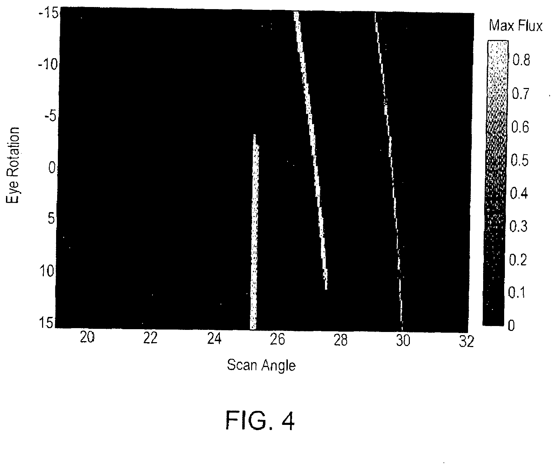

Figure 4 shows a 2D plot of the received signal amplitude (related to light intensity) at the sensor 5 of an optical device 1, such as the optical device 1 illustrated in Figure 3, as a function of scanning angle on the x-axis and the rotational angle of the eye 3 on the y-axis. As can be seen, high (non-zero) amplitudes are measured at certain scanning angles for certain rotational positions of the eye 3. In particular, three lines are prominent in the plot. The first (left most) line represents the reflection from the eye ball (not the cornea) onto the sensor 5, which occurs at a particular scan angle (around 25° in this example). This reflection does not depend on the rotational position of the eye 3 (as the eye ball is spherical with the centre of the sphere coinciding with the centre of rotation), and can therefore not by itself be used to determine the rotational position. The second (middle) line represents reflections from the cornea via a first optical element 4a. The line slopes, so that the scan angle changes. This means that the scan angle at which the sensor 5 receives reflected light from the optical element 4a depends on the rotational position of the eye 3. Hence, the rotational position of the eye 3 (the angle of rotation) can be determined from the received amplitude as a function of scanning angle. The signal amplitude is substantially zero around the line, as only light incident on the optical element 4a at the predefined angle α₁ is focused onto the sensor 5. The third (right most) line represents reflections from the cornea via a second optical element 4b. By using two optical elements 4a and 4b to provide, more accurate determination of the rotational position can be achieved.

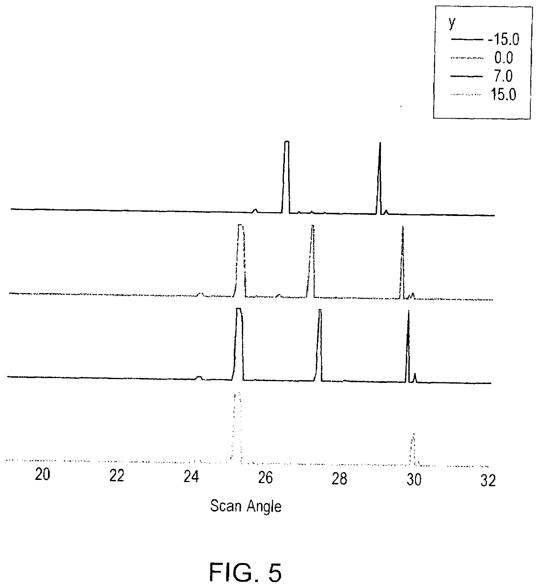

Figure 5 shows a graph with the received signal amplitude plotted against scan angle of a laser scanner for four different rotational positions of the eye from -15° to 15° along the scanning direction. Each plot represents a horizontal cross section of the 2D plot of Figure 4. The positions, and to some extent the occurrence, of the peaks depends on the rotational position of the eye.

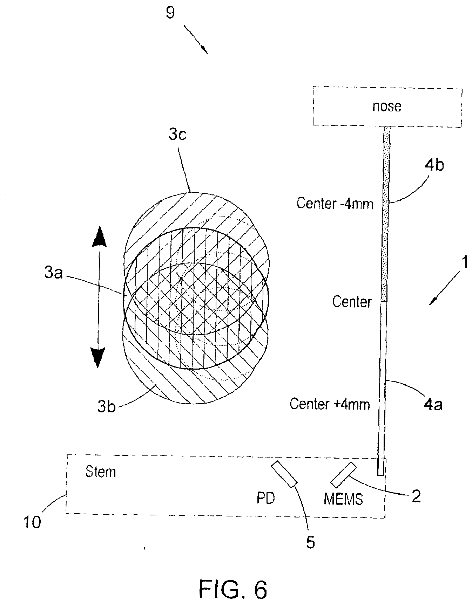

Figure 6 shows a schematic diagram of a part of a head mounted device 9, such as glasses, comprising a stem 10. The head mounted device comprises an optical device 1 for eye tracking comprising a MEMS laser scanner 2, diffractive optical elements 4a and 4b, and sensor 5. The sensor 5 and laser scanner 2 are integrated in the stem 10 of the device. The absolute position of the eye can change (e,g, if the glasses are slightly askew) and affect the mapping between scan angle and the rotational angle of the eye 3. Figure 6 illustrates a horizontal translation of the eye relative to the head mounted device 9 (and to the optical device 1 integrated therein). The eye 3 is shown in three position, in the centre 3a and translated at +4 mm 3b and -4 mm 3c.

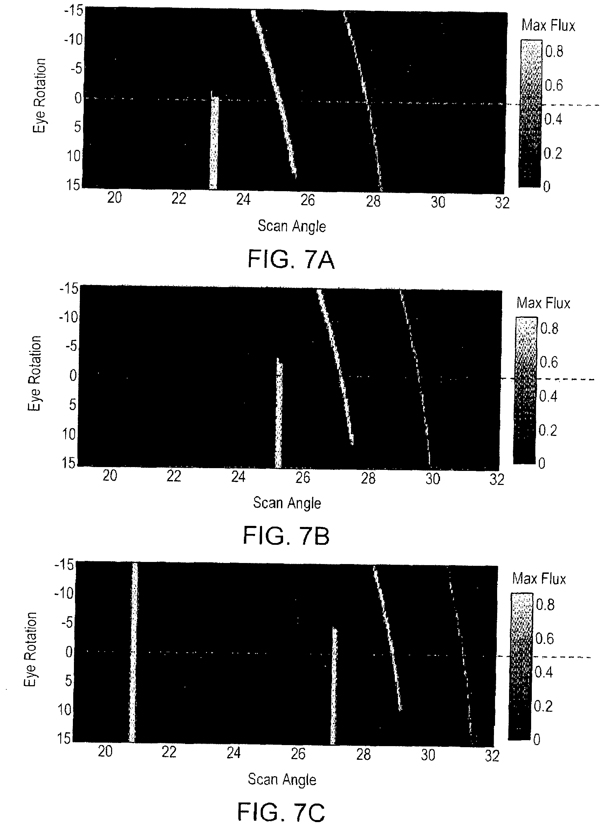

Figures 7A to 7C show the 2D plots of signal amplitude plotted against scan angle and rotational position for the three different translational positions of the eye as illustrated in Figure 6. Figure 7A shows the plot for when the eye is at -4 mm, Figure 7B when the eye is centred, and Figure 7C when the eye is at +4 mm. The translation of the eye causes a translation of the lines in the plot. For example, the straight vertical line from the spherical part of the eyeball appears at about 23°, 25° and 27° respectively. Hence, this line, although not directly usable for determining the rotational position, may be used to determine the absolute position of the eye and any translational movement relative to the optical elements.

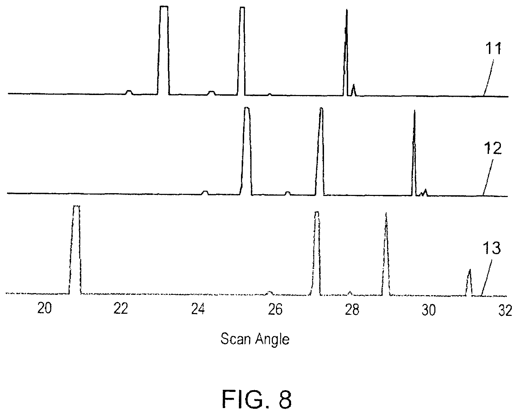

Figure 8 shows cross sectional line plots from the 2D plots in Figures 7A to 7C respectively at the rotational angle of 0°. The first (uppermost) plot 11 corresponds to the eye at -4 mm, the second (middle) plot 12 corresponds to the centred (nominal) eye position, and the third (lowermost) plot 13 corresponds to the eye at +4 mm. Peak detection may be used to determine the scan angles, from which the rotational position of the eye can be determined.

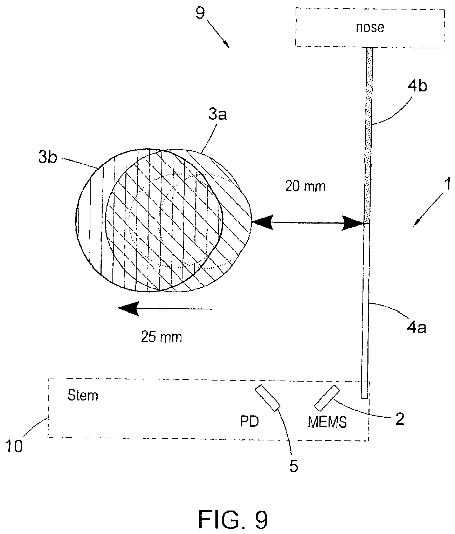

Figure 9 shows a schematic diagram of a part of a head mounted device 9 comprising a stem 10. The optical device 1 is integrated in the head mounted device 9, with the laser scanner 2 and the sensor 5 located in the stem 10. Figure 9 illustrates horizontal translation of the eye relative to the optical device 1. In a first (nominal) position 3a, the eye is located 20 mm from the optical elements 4a and 4b. In a second (translated) position 3b, the eye is located 25 mm from the optical elements 4a and 4b (i.e. 5 mm backwards). Such a 5 mm horizontal shift may be caused by the head mounted device sliding down the nose.

Figures 10A and 10B show the 2D plots of signal amplitude plotted against scan angle and rotational position for the two different translational positions of the eye as illustrated in Figure 9. Figure 10A shows the plot for when the eye is at 20 mm, and Figure 10B when the eye is at 25 mm. The translation of the eye causes a translation of the lines in the plot. For example, the straight vertical line from the spherical part of the eyeball appears at about 25° and 22.5° respectively. Hence, this line, although not directly usable for determining the rotational position, may be used to determine the absolute position of the eye and any translational movement relative to the optical elements.

Figure 11 shows cross sectional line plots from the 2D plots in Figures 10A and 10B at the rotational angle of 0°. The first (uppermost) plot 14 corresponds to the eye at 20 mm, the second (lowermost) plot 15 corresponds to the eye at 25 mm. Peak detection may be used to determine the scan angles, from which the rotational position of the eye can be determined.

Figure 12 shows a schematic diagram of an optical device 1 according to another embodiment. A MEMS laser scanner 2 is configured to scan a laser beam across the eye 3. Two optical elements 4a and 4b are used to direct light reflected from the eye 3 at predefined angles towards respective sensors 5a and 5b. The optical elements 4a and 4b are lenses that are configured to focus light incident at the predefined angle onto the respective sensor 5a and 5b. Because the optical elements are not reflective, the sensors 5a and 5b are located in front of the optical elements 4a and 4b.

Figure 13 shows a similar optical device 1 having two optical elements 4a and 4b, but configured to focus light onto the same photodiode of the sensor 5.

Figure 14 shows another embodiment of the optical device 1 comprising a reflector 16 for reflecting the laser beam from the laser scanner 2 onto the eye 3. The reflector 16 is a custom diffractive optical element located in the scanning path to add flexibility in the placement of the laser scanner 2.

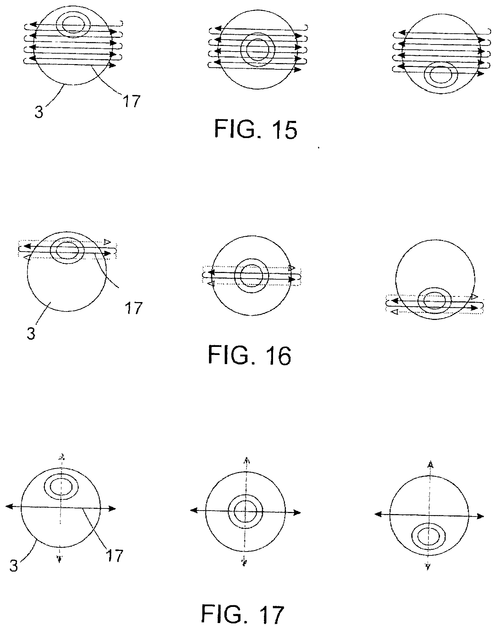

Figures 15 to 17 illustrate three types of scans which the optical device may be configured to perform. The arrows 17 indicate the path of the laser beam across the eye 3. Figure 15 illustrates a vertical scan wherein the beam is scanned across the eye 3 from top to bottom. Figure 16 shows an alternative where a smaller number of line scans may be used by inferring the movement direction of the eye from so called vertical pursuit. Figure 17 shows an orthogonal scan, wherein a laser beam is scanned across the eye 3 substantially vertically and another beam is scanned across the eye 3 substantially horizontally.

Although specific embodiments have been described above, the claims are not limited to those embodiments. Each feature disclosed may be incorporated in any of the described embodiments, alone or in an appropriate combination with other features disclosed herein.

**Reference Numerals**

| | | | |
|---|---|---|---|
| 1 | Optical device | 9 | Head mounted device |
| 2 | Laser scanner | 10 | Stem |
| 3 | Eye | 11 | First plot of signal amplitude |
| 4 | Optical element | 12 | Second plot signal amplitude |
| 5 | Sensor | 13 | Third plot signal amplitude |
| 6 | Emitted beam | 14 | Fourth plot signal amplitude |
| 7 | Reflected beam | 15 | Fifth plot signal amplitude |
| 8 | Focused beam | 16 | Reflector |
| | | 17 | Scanning direction |

## Claims

1. An optical device (1) for eye tracking comprising:
a light scanner (2) configured to scan a light beam (6) across an eye (3);
an optical element (4) configured to collect light (7), which is reflected from the eye (3) and incident on the optical element (4) at a predefined angle, onto a sensor (5); and
the sensor (5) configured to sense the light (8) focused by the optical element (4).

2. An optical device (1) according to claim 1, wherein the optical element (4) is configured to collect light (7) having a wavelength in the range of 300 nm to 2000 nm or at least in the range of 850 nm to 1400 nm.

3. An optical device (1) according to claim 1 or 2, wherein the optical element (4) is substantially transparent to light having a wavelength in the visible range.

4. An optical device (1) according to claim 1, 2 or 3, wherein the optical element (4) is configured to reflect light (7) incident at the predefined angle.

5. An optical device (1) according to any one of the preceding claims, wherein the sensor (5) comprises a photodiode.

6. An optical device (1) according to any one of the preceding claims, wherein the sensor (5) includes one photodiode, and the optical element (4) is configured to collect the light onto the one photodiode.

7. An optical device (1) according to any one of the preceding claims, wherein the sensor (5) comprises an array of pixels and/or a quadrant sensor.

8. An optical device (1) according to any one of the preceding claims, wherein the light scanner (2) is a micromechanical systems, MEMS, laser scanner.

9. An optical device (1) according to claim 8, wherein the light scanner (2) comprises a vertical cavity surface emitting laser, VCSEL, source and a micromirror.

10. An optical device (1) according to claim 9, wherein the VCSEL source is configured to emit light at a wavelength in the range of 850 nm to 1400 nm.

11. An optical device (1) according to any one of the preceding claims, wherein the optical device (1) comprises two optical elements (4a, 4b) configured to collect light, which is reflected from the eye (3) and incident on the optical elements (4a, 4b) at different respective predefined angles.

12. An optical device (1) according to claim 11, wherein each optical element (4a, 4b) is configured to collect the light onto a same photodiode comprised by the sensor (5).

13. An optical device (1) according to claim 11, wherein the sensor (5) comprises a photodiode for each optical element (4a, 4b), and each optical element (4a, 4b) is configured to collect light onto a respective photodiode comprised by the sensor (5).

14. An optical device (1) according to any one of the preceding claims, further comprising a reflector (16) located in a scanning path for reflecting the light beam (6) onto the eye (3).

15. A head mounted device (9) comprising an optical device (1) according to any one of claims 1 to 14.

16. A head mounted device (9) according to claim 15, wherein at least the light scanner (2) and the sensor (5) of the optical device (1) are located in a stem (10) of the head mounted device (9).

17. A head mounted device (9) according to claim 15, wherein the sensor (5) and light scanner (2) are located on different sides of the or each optical element (4), so that the light reflected from the eye (3) travels through the or each optical element (4) to the sensor (5).

18. A method of eye tracking comprising:
scanning a light beam (6) across an eye (3) by sweeping the beam (6) over a range of scanning angles;
collecting light reflected from the eye (3) and incident on an optical element (4) at a predefined angle onto a sensor (5);
receiving the collected light with the sensor (5) and measuring an intensity of the collected light; and
mapping the intensity and associated scanning angle of the light beam (6) to a rotational position of the eye (3).
